Europäisches Patentamt

European Patent Office

Office européen des brevets

(19)

(11) **EP 1 093 878 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
**B23H 7/20** (2006.01) **B23H 7/28** (2006.01)
**B23H 7/04** (2006.01)

(21) Anmeldenummer: **00118496.9**

(22) Anmeldetag: **25.08.2000**

(54) **Prozessparameteroptimierung bei der Funkenerosiven Bearbeitung**

Rrocessparameter optimising for electroerosion machining

Optimisation des paramètres d'usinage pour machine d'usinage par électroérosion

(84) Benannte Vertragsstaaten:
**AT BE CH CY DE DK ES FI FR GB GR IE IT LI LU MC NL PT SE**

(30) Priorität: **18.10.1999 DE 19950151**

(43) Veröffentlichungstag der Anmeldung:
**25.04.2001 Patentblatt 2001/17**

(73) Patentinhaber: **AGIE SA**
**6616 Losone (CH)**

(72) Erfinder:
• **Boccadoro, Marco**
**6653 Verscio (CH)**
• **Buzzini, Andrea**
**6618 Arcegno (CH)**
• **Bonini, Stefano**
**6614 Brissago (CH)**

(74) Vertreter: **Niederkofler, Oswald et al**
**Samson & Partner**
**Widenmayerstrasse 5**
**80538 München (DE)**

(56) Entgegenhaltungen:
EP-A- 0 340 569     US-A- 4 057 703
US-A- 4 247 749     US-A- 4 948 934

• M. WECK ET AL.: "Adaptive Regelung des Senkerodierens" VDI Z., Bd. 127, Nr. 9, 1985, Seiten 319-323, XP002160439 VDI VERLAG GMBH. DUSSELDORF., DE ISSN: 0042-1766

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung zum funkenerosiven oder elektrochemischen Bearbeiten von Werkstücken, bei dem eine Bearbeitungselektrode relativ zu einem Werkstück bewegt wird, die Bearbeitung Zyklen umfaßt und geeignete Prozeßparameter für die Bearbeitung des aktuellen Zyklus insbesondere unter Berücksichtigung von Prozeßparametern des aktuellen Zyklus eingestellt werden.

Eine solche Vorrichtung und ein derartiges Verfahren sind aus der V.D.I.-Zeitung 127 (1985) Mai, No9, Düsseldorf, Deutschland "Adaptive Regelung des Senkerodierens" bekannt. Dieses Dokument offenbart die Oberbegriffe der Ansprüche 1 und 17.

Im Stand der Technik sind mehrere zyklische Bearbeitungsverfahren, insbesondere Planetärerodierverfahren beschrieben.

Ein solches gattungsgemäßes Planetärerodierverfahren ist beispielsweise aus dem "Industrie-Anzeiger", Sondernummer, April 1981, Seite 109ff. bekannt. Bei diesem Verfahren geht es um das Planetärerodieren von Einsenkungen, bei dem für eine Bearbeitung eine zyklische Translationsbewegung zwischen Bearbeitungselektrode und Werkstück lateral in zur Vorschubrichtung transversal angeordneten Ebenen durchgeführt wird. Jede Ebene wird dabei zyklisch von der Bearbeitungselektrode bearbeitet, wobei die zyklischen Translationsbewegungen in Form von Orbitalbewegungen zur Aufweitung einer Bearbeitung oder zur Schlichtbearbeitung eingesetzt werden.

Bei der funkenerosiven Bearbeitung findet der Materialabtrag am elektrisch leitfähigen Werkstück dadurch statt, daß die Bearbeitungselektrode an das Werkstück herangeführt wird und hierbei eine elektrische Entladung erfolgt. Die Bearbeitung erfolgt dann durch die Translationsbewegung zwischen der Elektrode und dem Werkstück in einer geeigneten Arbeitsflüssigkeit. Eine der Translationsbewegung überlagerte Spaltweitenregelung sorgt für die Einhaltung des geeigneten Abstandes zwischen der Bearbeitungselektrode und dem Werkstück.

Dabei ist aus der gattungsgemäßen Druckschrift bekannt, zur Vermeidung von Wirkungsgradverlusten die Geschwindigkeit der Translationsbewegung in Abhängigkeit von dem aktuellen Prozeßzustand zu steuern, um beispielsweise in Leerlaufabschnitten (Abschnitten der zyklischen Translationsbewegung, in denen während der Bearbeitung kein Materialabtrag mehr stattfindet) die Translationsbewegung mit einer erhöhten Geschwindigkeit durchzuführen. Nachteilhaft bei diesem Verfahren ist jedoch, daß sich im Laufe der Bearbeitung abhängig von der Geometrie der Sollbahn starke Schwankungen der Istbahn innerhalb eines Zyklus auftreten können. Weiterhin ist bei erhöhter Geschwindigkeit das Abbremsen bzw. Verzögern an heiklen Stellen problematisch. Konkret kann es z.B. bei abrupten Richtungsänderungen geschehen, daß nicht rechtzeitig abgebremst wird und die Bearbeitungselektrode im Extremfall sogar mit dem Werkstück kollidiert. Hierdurch kann das Spaltweitenregelungssystem überfordert werden, so daß vermehrt Fehlentladungen entstehen können, die einen erhöhten Verschleiß der Bearbeitungselektrode zur Folge haben.

Aus der EP 0 340 569 ist ein weiterentwickeltes Planetärerodierverfahren bekannt, das obige Probleme zu lösen sucht. Dabei wird jeder Planetärumlauf (Zyklus) in eine bestimmte Anzahl an Winkelposition des Planetärwinkels unterteilt und die Istbahn, d.h. die effektive Auslenkungsamplitude der Bearbeitungselektrode, für jede Winkelposition gespeichert. Anschließend wird vorausschauend die Sollbahn für den jeweils anstehenden Planetärumlauf aus den Istwerten zumindest eines der vergangenen Planetärumläufe und des zu erwartenden Abtragsvolumen festlegt. Der Prozeß läuft bei annähernd konstanter Planetärgeschwindigkeit ab. Außerdem werden möglichst abtragsintensive Entladungen angestrebt, und somit eine kürzere Bearbeitungszeit. Die Istbewegung kann, wie gesagt, aus einem oder mehreren vorangehenden Planetärumläufen oder alternativ aus einem Probelauf ohne Erosion ermittelt werden. Das Schwergewicht dieses Verfahrens liegt demnach bei der Beschleunigung des Bearbeitungsprozesses.

Zusammenfassend kann festgestellt werden, daß diese Druckschrift die Geometriedaten vorangehender Planetärumläufe berücksichtigt, um die Geometriedaten des anstehenden Planetärumlaufes anzupassen. Prozeßparameter vorangehender Planetärumläufe werden dabei nicht berücksichtigt.

Grundsätzlich betrachtet bei allen bekannten Vorrichtungen die zugehörige CNC-Steuerung die Bearbeitung als abgeschlossen, sobald das Untermaß erreicht wird. Das zu erreichende Untermaß bezieht sich jedoch auf eine in Prozeßparameter-Datensätzen gespeicherte theoretische Spaltbreite. Eine Änderung der effektiven Spaltbreite, wie sie gewöhnlich durch die Spaltweiten-Regelung hervorgerufen wird, bleibt unerkannt, was äußerst schädigende Auswirkungen auf die Konturgenauigkeit zu Folge hat.

Der Erfindung liegt die Aufgabe zugrunde, das gattungsgemäße Verfahren dahingehend zu verbessern, das ohne Zeiteinbuße eine verbesserte geometrische Bearbeitungsgenauigkeit ermöglicht wird, insbesondere die Prozeßsicherheit und Reproduzierbarkeit zu erhöhen.

Die Erfindung löst die Aufgabe jeweils mit den Gegenständen der Ansprüche 1 und 18. Bevorzugte Ausführungsbeispiele der Erfindung sind in den Unteransprüchen beschrieben.

Nach Anspruch 1 werden zur Lösung der Aufgabe bei einem gattungsgemäßen Verfahren für die Einstellung der Prozeßparameter des aktuellen Zyklus ferner gespeicherte Prozeßparameter zumindest eines vorangehenden Zyklus herangezogen.

Der Erfindung geht die Beobachtung voraus, daß bei zyklischen Bearbeitungen eine ortsgebundene Entwicklung gewisser Prozeßparameter festzustellen ist. Tritt z.B. eine Störung an einer Stelle eines Zyklus auf, so ist eine Entwicklung dieser Störung meistens auch im darauf folgenden Zyklus an der selben Stelle ersichtlich.

Erfindungsgemäß wird das Prozeßverhalten nunmehr für bereits durchgeführte Zyklen gespeichert und zur Festlegung bestimmter Prozeßparameter des anstehenden Zyklus ausgewertet, wodurch vorausblickend an zu bearbeitenden Abschnitte des anstehenden Zyklus herangefahren werden kann. Beispielsweise können abhängig davon, ob ein störungsfreier Abschnitt, ein Leerlauf-Abschnitt oder ein kritischer Abschnitt erwartet wird, die aktuell anzuwendenden Prozeßparameter entsprechend angepaßt werden. Somit können vorteilhaft Prozeßstörungen und Zeiteinbußen weitgehend vermieden, eine gute Formtreue erreicht und insgesamt der Prozeß optimiert werden.

Bevorzugt wird während zumindest eines vorangehenden Zyklus wenigstens ein Prozeßparameter gemessen, aus diesem wenigstens einen gemessenen Prozeßparameter wenigstens ein für den aktuellen Zyklus einzustellender Prozeßparameter abgeleitet, der wenigstens eine abgeleitete Prozeßparameter während des vorangehenden Zyklus abgespeichert und der wenigstens eine abgespeicherte Prozeßparameter während des aktuellen Zyklus eingestellt.

Bevorzugt handelt es sich bei der Zyklen umfassenden Bearbeitung im Sinne der vorliegenden Erfindung (die nachfolgend auch als zyklische Bearbeitung bezeichnet wird) beispielsweise um das Planetärerodieren bei der Senkerosion oder den Vollabtragsschnitt (Pocketing) beim Drahterodieren. Aber auch jede Drahterosionsbearbeitung, bei welcher ein Vollschnitt und eine bestimmte Anzahl an Nachschnitten ausgeführt werden, kann im Prinzip als zyklisch bezeichnet werden und ist somit Erfindungsgegenstand.

Bevorzugt werden für die Einstellung der Prozeßparameter alternativ oder zusätzlich in einer Tabelle fest gespeicherte Prozeßparameter herangezogen, welche insbesondere bezüglich einer Optimierung des Abtrags, bezüglich einer Durchführung eines Leerlaufs und/oder bezüglich der Durchführung einer garantierten störungsfreien Bearbeitung festgelegt sind. Somit können ferner für bestimmte Standardsituationen, wie die Leerlauf-Bearbeitung, oder auch für bestimmte Zusammenstellungen von Werkstück, Bearbeitungselektrode, zu bearbeitender Geometrie, etc. vorgegebene Prozeßparameter fest eingespeichert werden, welche dann in bestimmten Situationen für die momentane Bearbeitung abgerufen werden können. Diese können insbesondere für solche Situationen abgerufen werden, wenn es zu Instabilitäten der Prozeßparameterregelung kommt.

Bevorzugt werden die vorangehenden Zyklen durch einen Soll/Istwert-Vergleich der gemessenen Prozeßparameter auf Abschnitte untersucht, in denen eine Bearbeitungsstörung, eine Leerlauf-Bedingung und/oder eine sonstige vom Normalfall abweichende Bedingung auftritt, und es werden zumindest in den entsprechenden Abschnitten des aktuellen Zyklus angepaßte Prozeßparameter eingestellt. Vorteilhaft werden so Abschnitte eines Zyklus gekennzeichnet, in denen bestimmte Situationen auftreten, und für die in dem nachfolgenden Zyklus mit hinsichtlich der Situation optimierten Prozeßparametern bearbeitet werden kann.

Bevorzugt werden bereits in einem Bereich vor den entsprechenden Abschnitten des aktuellen Zyklus angepaßte Prozeßparameter eingestellt. Somit können vorteilhaft beispielsweise abrupte Übergänge in den Prozeßparametern vermieden werden, die andernfalls zu Bearbeitungsungenauigkeiten führen können.

Bevorzugt wird die Länge des Bereichs abhängig von der Planetärgeschwindigkeit gewählt. Für den Fall der Drahterosion entspricht die Planetärgeschwindigkeit der Drahtvorschubgeschwindigkeit.

Bevorzugt wird die Bearbeitung in eine Vielzahl Schichten und Sektoren unterteilt und die relevanten Prozeßparameter werden schicht- und sektorweise abgespeichert. Für die Senkerosion bei der Planetärerosion kann dabei beispielsweise das abzutragende Volumen in normal zur Vorschubrichtung liegende Schichten unterteilt werden. Gleichzeitig kann die Orbitalbewegung in Sektoren unterteilt werden, so daß im Ergebnis jeder Bearbeitungsort durch ein Sektorelement spezifiziert werden kann. Ortsbezogene Prozeßinformationen können dadurch in eindeutiger Weise zugeordnet und abgespeichert werden.

Für die Drahterosion können beispielsweise diese Schichten dem Vollschnitt und den Nachschnitten entsprechen und die Sektoren entlang der Nachschnitte definiert sein.

Bevorzugt werden für den aktuellen Zyklus die Prozeßparameter zu Beginn eines Sektors eingestellt, welche aus den gemessenen Prozeßparametern vorangehender Zyklen abgeleitet sind, und Prozeßparameter des aktuellen Zyklus jeweils am Ende eines Sektors als Meßgrößen für den auf den aktuellen Zyklus folgenden Zyklus erfaßt und gespeichert. Vorteilhaft werden hierdurch Prozeßinstabilitäten vermieden. Durch die Wahl der Sektorlänge kann dabei das "Regelverhalten" der gesamten Prozeßsteuerung beeinflußt werden, d.h. eine längere Sektorlänge führt damit zu längeren Abschnitten, in dem diese Prozeßregelung quasi als Prozeßsteuerung arbeitet.

Bevorzugt werden nach der Einstellung der Prozeßparameter zu Beginn eines Sektors bis zur Messung der Prozeßparameter am Ende eines Sektors lediglich ausgewählte Prozeßparameter auf besondere Störungsfälle hin überwacht. Dies hat den Vorteil, daß während der Quasi-Steuerung innerhalb eines Sektors zumindest solche Prozeßparameter überwacht werden, die erhebliche Störsituationen anzeigen können. Auf diese Störsituationen kann dann beispielsweise mit abgespeicherten Prozeßparametern reagiert werden, die auf jeden Fall zu einer störungsbereinigten Situation führen.

Bevorzugt werden die gespeicherten Prozeßparameter nach jedem Zyklus mit einem Gewichtungskoeffizienten multipliziert. Dies hat den Vorteil, daß je nach Situation, bestimmte Zyklen stärker oder weniger stark zu der Bestimmung der aktuellen Prozeßparameter beitragen. Insbesondere können bei jeweiliger Multiplikation aller Prozeßparameter innerhalb eines Zyklus mit einem Faktor kleiner als eins die Prozeßparameter zeitlich weiter zurückliegenden Zyklen weniger stark in beispielsweise eine Mittelung der Prozeßparameter einer bestimmten Anzahl zurückliegender Zyklen einfließen.

Ganz besonders bevorzugt können dabei Zyklen mit störungsbehafteten Abschnitten mit einem erhöhten Gewichtungskoeffizienten multipliziert werden, damit diese vorteilhaft einen stärkeren Einfluß auf die nachfolgenden Zyklen haben. Diese Störung könnte sich beispielsweise erst in dem übernächsten oder einem der nachfolgenden Zyklen noch einmal wiederholen. Durch diese Gewichtung können auch in diesen Zyklen an den relevanten Abschnitten besondere Maßnahmen ergriffen werden.

Bevorzugt umfassen die zu speichernden Prozeßparameter wenigstens einen der nachfolgenden Parameter:

- die Summe der Servo-Inteps-Fehler,
- die Entladeleistung,
- den mittleren Entladestrom,
- die mittlere Erosionsspannung,
- die Zündverzögerungszeit,
- den Prozentanteil an Kurzschlußimpulsen,
- den Prozentanteil an Instabilität,
- die Frequenz der programmierten Rückzugsbewegungen,
- die Anzahl der Eingriffe des Verfahrens zum Vermeiden entarteter Impulse
- die mittlere Pausenspannung, d.h. die mittlere Spannung während der Pause zwischen den Impulsen.

Bevorzugt umfassen die einzustellenden Prozeßparameter wenigstens einen der nachfolgenden Parameter:

- die Planetärgeschwindigkeit,
- Impulsparameter, insbesondere

    - die Periodendauer,
    - die Pausendauer,
    - den Strom,
    - die Spannung,

- Servosteuerungsparameter, insbesondere

    - die Verstärkung,
    - den Servosollwert,

- programmierte Rückzugbewegungen, insbesondere

    - die Frequenz der Rückzugbewegungen,
    - den Hub der Rückzugbewegungen,
    - die Strategie bei Rückzugbewegungen.

Bevorzugt wird die Planetärgeschwindigkeit als einzustellender Prozeßparameter hinsichtlich des Abtrags optimiert, indem diese aus mehreren Zyklen mit jeweils unterschiedlicher Planetärgeschwindigkeit ermittelt wird, wobei jeder Zyklus mit einer konstanten Planetärgeschwindigkeit durchgeführt wird. Vorteilhaft kann hiermit anhand mehrerer Testzyklen oder tatsächliche Bearbeitungszyklen automatisch eine hinsichtlich des Abtrags optimierte Planetärgeschwindigkeit ermittelt werden.

Bevorzugt wird die Planetärgeschwindigkeit als einzustellender Prozeßparameter hinsichtlich der Bearbeitungsgenauigkeit optimiert, indem ein Zyklus mit einer gegenüber der abtragsoptimierten Planetärgeschwindigkeit verringerten Planetärgeschwindigkeit durchfahren wird und anhand gemessener Prozeßparameter die in der Bearbeitungsgenauigkeit optimierte Planetärgeschwindigkeit ermittelt wird. Vorteilhaft kann damit die Bearbeitungsgenauigkeit insbesondere während der Endphase der Bearbeitung stark erhöht werden.

Dabei wird die abtragsoptimierte Planetärgeschwindigkeit und/oder die in der Bearbeitungsgenauigkeit optimierte Planetärgeschwindigkeit bevorzugt periodisch nach einer bestimmten Anzahl Zyklen oder bei Eintreten relevanter Änderungen der Prozeßparameter neu ermittelt.

Die Erfindung sowie weitere Vorteile und Merkmale der Erfindung werden nunmehr anhand eines bevorzugten Ausführungsbeispiel mit Bezug auf die beigefügte Zeichnung näher erläutert. In der Zeichnung zeigen:

Fig. 1      eine schematische Darstellung einer Funkenerosionsvorrichtung;

Fig. 2a,b   jeweils ein Aufsicht auf und einen Querschnitt einer runden Bearbeitungselektrode beim Planetärerodieren eines Werkstückes in der Funkenerosionsvorrichtung der Fig. 1;

Fig. 3a-d   eine schematische Darstellung der Unterteilung der Bearbeitung in Schichten und Sektoren jeweils in einer Aufsichts- und Querschnittsansicht;

Fig. 4a,b   schematische Diagramme zum Erläutern eines Ermittlungsverfahren zum automatischen Ermitteln einer abtragsoptimierten Planetärgeschwindigkeit.

Zum besseren Verständnis der Erfindung wird nachfolgend das erfindungsgemäße Verfahren anhand eines Ausführungsbeispiels für die Senkerosion erläutert und die dort üblichen Fachausdrücke verwendet, was jedoch nicht einschränkend zu verstehen ist.

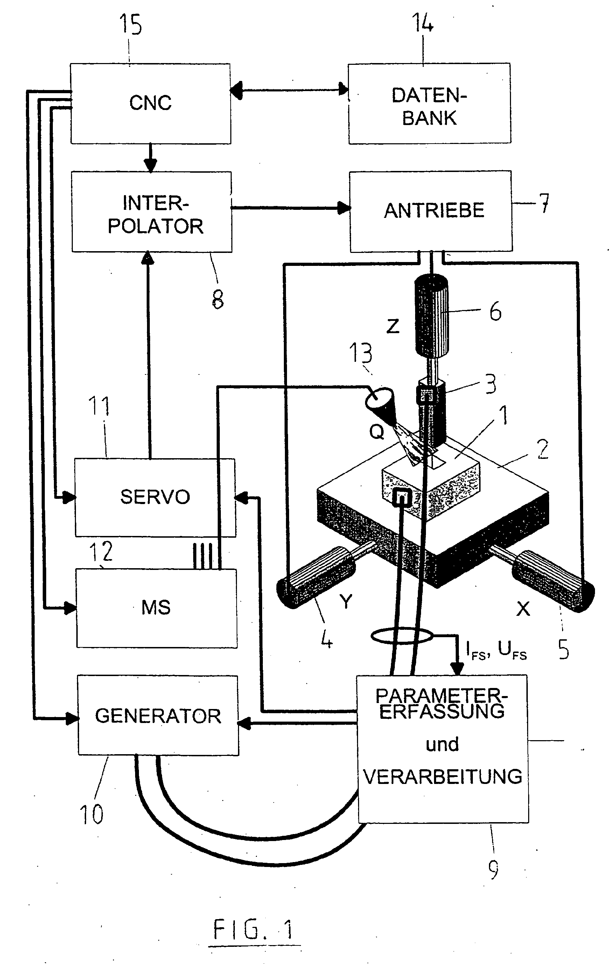

In Figur 1 ist eine schematische Darstellung einer Funkenerosionsvorrichtung gezeigt, welche für die Planetärerodierbearbeitung ausgelegt ist. Ein Werkstück 1 ist auf einem Bearbeitungstisch 2 aufgespannt und wird von einer Bearbeitungselektrode 3 bearbeitet. Zum Erzeugen einer Relativbewegung zwischen Bearbeitungselektrode 3 und Werkstück 1 ist der Bearbeitungstisch 2 in einer Horizontalebene von jeweils einem in X- und in Y-Richtung wirkenden Antrieb 4 und 5 verschiebbar. Ferner ist die Bearbeitungselektrode 3 von einem in Z-Richtung wirkenden Antrieb 6 in das Werkstück 1 senkbar.

Die drei Antriebe 4 bis 6 werden von einer Antriebssteuerung 7 angesteuert, welche wiederum von einem Interpolator 8 beispielsweise die entsprechenden Schrittwerte (im Falle von Schrittmotoren) für die einzelnen Antriebe 4 bis 6 erhält. Ferner werden die bei der Bearbeitung u.a. auftretenden Prozeßparameter, wie die Istwerte des Bearbeitungsstrom $I_{FS}$ und der Bearbeitungsspannung $U_{FS}$ im Bearbeitungsspalt, von einer Parametererfassungs- und Verarbeitungseinheit 9 erfaßt, verarbeitet und an einen Generator 10 weitergeleitet. Die Parametererfassungs- und Verarbeitungseinheit 9 ist hierzu dem Generator 10 gekoppelt, welcher in Antwort auf die erfaßten Istwerte der Prozeßparameter bestimmte Sollwerte des Bearbeitungsstroms $I_{FS}$ und der Bearbeitungsspannung $U_{FS}$ erzeugt erzeugt und über die Parametererfassungs- und Verarbeitungseinheit 9 an die Bearbeitungselektrode 3 und das Werkstück 1 legen läßt.

Die Parametererfassungs- und Verarbeitungseinheit 9 ist ferner mit einer Servoeinheit 11 gekoppelt, welche in Antwort auf erfaßte Prozeßparameter spaltweitenregelnde Prozeßparameter, wie die Planetärgeschwindigkeit, über den Interpolator 8 an die Antriebssteuerung 7 liefert. Der Interpolator 8 berechnet gleichzeitig die von den jeweiligen Antrieben 4 bis 6 auszuführenden einzelnen Schritte, beispielsweise anhand von die Geometrie bestimmenden Vektoren und der von der Servoeinheit 11 zugeführten Planetärgeschwindigkeit. Die Parametererfassungs- und Verarbeitungseinheit 9 erkennt beispielsweise anhand der erfaßten Istwerte des Bearbeitungsstroms $I_{FS}$ und der Bearbeitungsspannung $U_{FS}$ im Bearbeitungsspalt, ob ein Kurzschluß auftritt, und berechnet basierend auf der Kurzschlußsituation eine entsprechende Planetärgeschwindigkeit, welche sie der Servoeinheit 10 zuführt.

Außerdem ist noch eine Spülflüssigkeitssteuerung 12 an die Servoeinheit 11 gekoppelt, welche einen Spülflüssigkeitsstrom unter einem bestimmten Druck über eine Spüldüse 13 in den Bearbeitungsspalt zwischen Werkstück 1 und Bearbeitungselektrode 3 befördert.

Die Servoeinheit 11, die Spülflüssigkeitssteuerung 12, der Generator 10 und eine Datenbank 14 sind mit einer CNC-Steuerung 15 gekoppelt, welche die Prozeßparameter der einzelnen Einheiten steuert. Die Datenbank 14 dient der Speicherung von Prozeßparametern, welche von der CNC-Steuerung 15 insbesondere für Standardsituationen (Störfall, Leerlauf-Bedingung, etc.) herangezogen werden. Dabei kann die CNC-Steuerung 15 insbesondere in Situationen mit einer erhöhten Prozeßinstabilität auf die in der Datenbank 14 abgespeicherten Festwerte für entsprechende Prozeßparameter zurückgreifen.

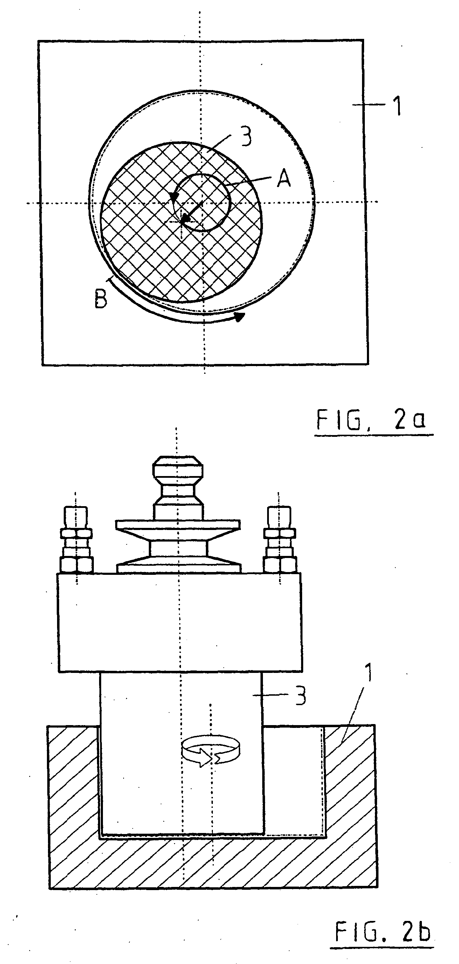

In den Figuren 2a und 2b ist das Werkstück 1 und die Bearbeitungselektrode 3 jeweils in Aufsicht und in Querschnittsansicht beim Planetärerodieren gezeigt. Beim Planetärerodieren erfolgt eine progressive Aufweitung einer Einsenkung dadurch, daß auf einer zur Vorschubrichtung normalen Ebene (in Fig. 2a die Blattebene) eine zyklische, meist kreisförmige Relativbewegung (Orbitalbewegung) zwischen Werkstück 1 und Bearbeitungselektrode 3 erfolgt, und dieser Relativbewegung eine Spaltweitenregelung überlagert wird. Diese zyklische Relativbewegung kann prozeßunabhängig sein. Die Spaltweitenregelung erfolgt längs eines Planetärvektors in Abhängigkeit der Prozeßparameter und der Prozeßbedingungen im Funkenspalt.

Für das richtige Verständnis der folgenden Beschreibung ist eine Definition der Begriffe Planetärgeschwindigkeit und Translationsgeschwindigkeit erforderlich. Die Planetärgeschwindigkeit ist die Geschwindigkeit, mit der die Planetärbewegung, z.B. die kreisförmige Relativbewegung (Orbitalbewegung) durchgeführt wird. Die Bearbeitungselektrode 3 wird hierzu entlang von Orbitalbewegungen mit einer bestimmten Planetärgeschwindigkeit bewegt, wie in Fig. 2a durch den kreisförmigen Pfeil A angezeigt. Die Planetärgeschwindigkeit ist dabei ein Maß, wie schnell die Bearbeitungselektrode 3 entlang dieser durch die X- und Y-Antriebe 4 und 5 aufgeprägten Orbitalbewegung bewegt wird. Die Translationsgeschwindigkeit ist die durch die Planetärgeschwindigkeit verursachte relative Geschwindigkeit zwischen Bearbeitungselektrode 3 und Werkstück 1 an einer bestimmten Stelle, z.B. an der Stelle B in Fig. 2a. Die Geometrie der Bearbeitungselektrode 3 und des Werkstückes 1 legt damit zu jedem Zeitpunkt für jeden Punkt zwischen Bearbeitungselektrode 3 und Werkstück 1 ein bestimmtes Verhältnis von Planetär- und Translationsgeschwindigkeit fest.

Die Wahl der optimalen Planetärgeschwindigkeit ist sehr wichtig, weil diese den Prozeß maßgebend beeinflußt. Ist diese zu hoch, so daß die Servoeinheit 11 nicht mehr die ideale Erosionsposition halten kann, dann fährt die Servoeinheit 11 die Bearbeitungselektrode 3 entlang des Planetärvektors zurück, und umgekehrt. Der Planetärvektor liegt bei dem in den Fig. 2a und 2b gezeigten Beispiel in einer zu der Z-Richtung leicht geneigten Richtung, so daß die Bearbeitungselektrode 3 von der Frontfläche und von der Seitenfläche der Absenkung abgehoben wird, sobald die Planetärgeschwindigkeit und die damit einhergehende Translationsgeschwindigkeit an der Bearbeitungsstelle größer als die Erosionsgeschwindigkeit ist.

Es ist bekannt, daß durch die relative Bewegung zwischen Bearbeitungselektrode 3 und Werkstück 1 ferner eine Spülwirkung erzielt werden kann. Eine höhere Translationsgeschwindigkeit ergibt eine bessere Spülwirkung, wodurch die abgetragenen Partikel besser aus dem Funkenspalt entfernt werden. Bei gleichbleibender Einstellung der Prozeßparameter führt eine höhere Planetärgeschwindigkeit und somit eine damit einhergehende höhere Translationsgeschwindigkeit zu einer niedrigeren Leitfähigkeit. Deshalb ist die Spaltbreite umgekehrt proportional zur Planetärgeschwindigkeit. Dabei kann bei einer langsameren Planetärgeschwindigkeit aufgrund des größeren Bearbeitungsspaltes und der längeren Funken beispielsweise genauer erkannt werden, was noch erodiert werden muß, d.h. die Bearbeitungsgenauigkeit kann mit einer erhöhten Genauigkeit ermittelt werden.

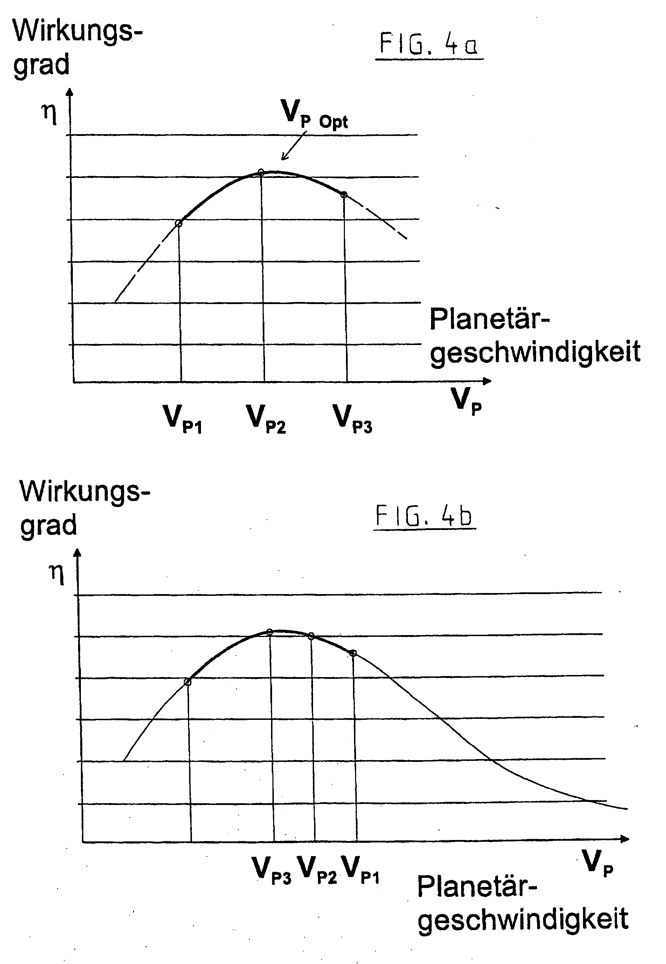

Es ist weiterhin bekannt, daß das abgetragene Volumen umso größer ist, je länger die Elektrode an einem Bearbeitungspunkt verharrt. Das abgetragene Volumen ist demnach in einem bestimmten Bereich (in Fig. 4b liegt ein solcher Bereich beispielsweise oberhalb der eingezeichneten Planetärgeschwindigkeit $V_{P3}$, siehe auch weiter unten) umgekehrt proportional zur Translationsgeschwindigkeit und damit auch umgekehrt proportional zur Planetärgeschwindigkeit.

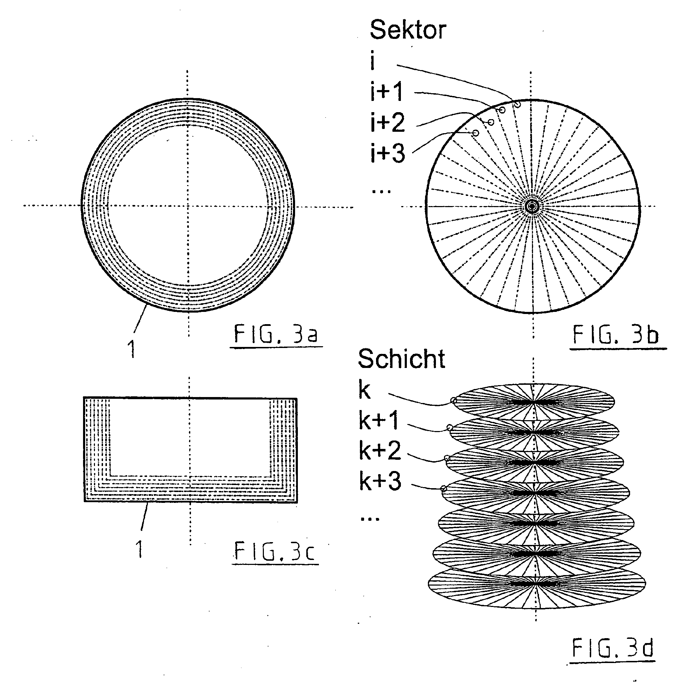

Es wird nunmehr Bezug auf Figuren 3a bis 3d genommen, in denen jeweils dargestellt ist, wie die Senkbearbeitung der Bearbeitungselektrode 3 in das Werkstück 1 in Schichten k, k+1, k+2, k+3, usw. und Sektoren i, i+1, i+2, i+3, usw. pro Schicht unterteilt ist. In Fig. 3c wird besonders deutlich ersichtlich, wie jede einzelne Schicht mit steigender Tiefe auch eine größere Bearbeitungsfläche sowohl an der Frontalfläche als auch an der Seitenfläche der Absenkung aufweist. Die zuvor definierten Schichten entsprechen in der Regel nicht den einzelnen Orbitalbewegungen bzw. Umläufen, wie sie gewöhnlich bei der Planetärerodierbearbeitung auftreten. So können zur Abarbeitung einer Schicht bei korrekter Anwendung der Erfindung eine Vielzahl Umläufe erforderlich sein.

Die vorstehend beschriebenen Schichten haben typischerweise eine Dicke von 10 bis 20 μm, so daß eine komplette Bearbeitung meist aus einer Vielzahl dieser Schichten besteht. In Abhängigkeit der aktuellen Planetärstrategie (spiralförmige Aufweitung für Standardelektroden oder sternförmige Aufweitung für scharfkantige Bearbeitungselektroden, kontinuierliches Drehen einer ausgewählten Achse beim Absenken, etc.) kann eine progressive Anpassung der Schichtdicke erfolgen. Am Ende gewisser Bearbeitungen können u.U. auch sehr feine Schichtdicken von weniger als 5 μm vorgesehen werden, damit jede Unstetigkeit vermieden wird.

Für jeden Sektor einer Schicht werden pro Zyklus von der CNC-Steuerung 15 bei der Bearbeitung beispielsweise folgende Prozeßparameter erfaßt und abgespeichert:

- die Summe der Servo-Inteps-Fehler, d.h. die Gesamtzahl der Rückzugsbewegungen entlang des Planetärvektors pro Sektor,
- die Entladeleistung P,
- der mittlere Entladestrom I,
- die mittlere Erosionsspannung U (Spaltspannung, Entladespannung, Leerlaufspannung),
- die Zündverzögerungszeit Td,
- etwaige Kurzschlüsse,
- eine Instabilität,
- die Frequenz der programmierten Rückzugsbewegungen (Timerfrequenz),
- die Anzahl Eingriffe des Verfahrens zur Vermeidung entarteter Impulse, etc.

Die CNC-Steuerung 15 erfaßt dabei den Istwert jedes der genannten Prozeßparameter und ermittelt dessen Abweichung von dem aus der Datenbank 14 bereitgestellten Sollwert. Diese Auswertung erfolgt bevorzugt auf der Basis mehrerer ausgeführter Umläufe, d.h. pro Schicht werden mehrere vollständige Umläufe gefahren. Es kann jedoch auch ein Umlauf genügen, insbesondere bei der Drahterosion, bei welcher nur eine begrenzte Anzahl an Nachschnitten und damit auch nur eine begrenzte Anzahl an Zyklen vorliegen.

Durch das Ausführen mehrerer Umläufe kann das Vertrauensniveau der erfaßten Istwerte verifiziert werden und eine bessere Voraussage erfolgen. Die neuesten Umläufe haben in den meisten Fällen eine größere Bedeutung, weshalb die CNC-Steuerung 15 diese meistens stärker gewichtet als weiter zurückliegende Umläufe. Hierzu multipliziert die CNC-Steuerung 15 die gespeicherten Istwerte der Prozeßparameter mit jedem Umlauf mit einem "Vergesslichkeitskoeffizienten" (beispielsweise einem Faktor kleiner 1), wodurch deren Bedeutung in den meisten Fällen zeitlich in die Zukunft gesehen abnehmen. Es ist jedoch möglich, daß in gewissen Bearbeitungsfällen der Prozeß zu einem "chaotischen" Zustand tendiert; in diesem Fall kann es vorteilhaft sein, älteren Umläufen eine größere Bedeutung zuzuordnen.

Die CNC-Steuerung 15 stellt dann insbesondere beim Erkennen von Prozeßstörungen und/oder Leerlauf-Bedingungen, welche sie insbesondere aus der Abweichung der Istwerte von den Sollwerten der Prozeßparameter ermittelt, folgende Prozeßparameter ein:

- die Planetärgeschwindigkeit,
- den Impulsparameter, insbesondere

  - die Periodendauer T,
  - die Pausendauer P,
  - den Strom I,
  - die Spannung U,

- den Servosteuerungsparameter, insbesondere

  - die Verstärkung (Gain),
  - den Servosollwert (Compression)

- programmierte Rückzugsbewegungen, insbesondere

  - die Frequenz der Rückzugbewegungen
  - den Hub der Rückzugbewegungen
  - die Strategie bei Rückzugbewegungen

Die einzelnen Werte der einzustellenden Prozeßparameter sowohl während der "normalen", der gestörten und/oder der Leerlauf-Bearbeitung bezieht die CNC-Steuerung 15 dabei aus der Datenbank 12.

Treten nun innerhalb einer Schicht während eines Zyklus bzw. Planetärumlaufes in einem Abschnitt (über ein oder mehrere Sektoren) des Umlaufes erschwerte oder kritische Bearbeitungsbedingungen auf, so paßt die CNC-Steuerung 15 in den darauf folgenden Umläufen Prozeßparameter bereits eine gewisse Anzahl Sektoren vor besagter Stelle an. Durch diese vorbeugende Maßnahme können erneute Prozeßentartungen in diesem Abschnitt vermieden und die Bearbeitungsbedingungen in den Normalbereich zurückgeführt werden. Es hängt im wesentlichen von der Planetärgeschwindigkeit und von der gewählten Aufteilung (Sektorbreite) ab, wie viele Sektorelemente vor bzw. nach dem kritischen Bereich besondere Maßnahmen zur Stabilisierung des Prozesses eingeleitet bzw. abgebrochen werden müssen. Je höher die Planetärgeschwindigkeit ist, desto früher sind vorbeugende Maßnahmen einzuleiten.

Die Ableitung der Prozeßparameter wird nachstehend anhand eines kurzen Beispiels näher erläutert: Die CNC-Steuerung 15 erfaßt pro Zyklus (z.B. ein Planetärumlauf) in jedem Sektor einer Schicht am Ende des Sektors bestimmte Prozeßparameter als Istwerte, leitet aus einem Vergleich dieser Istwerte mit den entsprechenden aus der Datenbank 14 abgerufenen Sollwerten bestimmte einzustellende Prozeßparameter ab und speichert diese ab. In dem darauffolgenden Zyklus werden die für den entsprechenden Sektor abgespeicherten Prozeßparameter zu Beginn des Sektors abgerufen und eingestellt. Während des Verlaufes eines Sektors greift die CNC-Steuerung 15 gewöhnlich nicht weiter in die Regelung ein, sondern erfaßt die Istwerte bestimmter Prozeßparameter erst wieder am Ende dieses Sektors. Allerdings kann die CNC-Steuerung 15 ggf. bestimmte besonders relevante Prozeßparameter überwachen, welche beispielsweise auf einen gravierenden Störungsfall (wie eine Kollision, etc.) hinweisen können und leitet bei Vorliegen eines solchen Störungsfall beispielsweise fest in der Datenbank 14 gespeicherte Abläufe ein, indem sie bestimmte Prozeßparameter entsprechend der abgespeicherten Daten einstellt. Somit könnte die CNC-Steuerung 15 im aktuellen Zyklus ggf. sogar lediglich ihre einzustellenden Prozeßparameter aus den gemessenen Istwerten vorangeganger Zyklen ableiten, und die momentan im aktuellen Zyklus auftretenden Prozeßparameter unberücksichtigt lassen.

Liegt beispielsweise der am Ende eines Sektors i+3 gemessene Wert für den Prozentanteil an Kurzschlüssen innerhalb des Sektors höher als der entsprechende gespeicherte Sollwert (beispielsweise 5%), so erkennt die CNC-Steuerung 15 eine Störung in der Bearbeitung in diesem Sektor i+3 und verkleinert dementsprechend beispielsweise den Servosollwert und vergrößert die Impulspausendauer. Diese beiden neu bestimmten Prozeßparameter können entweder von der CNC-Steuerung rechnerisch ermittelt werden oder aus der Datenbank 14 abgerufen werden (wo sie für einen Störungsfall, beispielsweise noch abhängig von dem tatsächlichen Istwert des Prozentanteils an Kurzschlüssen abgespeichert sind). Diese beiden neuen Prozeßparameter werden für den Sektor i+3 abgespeichert und im nächsten Zyklus zu Beginn dieses Sektors i+3 wieder abgerufen und entsprechend eingestellt. Dabei kann die CNC-Steuerung 15 im aktuellen Zyklus bereits einige Sektoren vor dem Sektor i die Prozeßparameter entsprechend anpassen, z.B. in den Sektoren i, i+1 und i+2 (z.B. indem die Prozeßparameter linear oder sonstwie von ihrem Wert im Sektor i-1 auf ihren neuen einzustellenden Wert im Sektor i+3 interpoliert werden).

Pro Zyklus werden die für jeden Sektor und jeden Zyklus ermittelten und abgespeicherten Prozeßparameter mit einem Gewichtungsfaktor (z.B. kleiner 1) multipliziert, damit die Prozeßparameter von zeitlich weiter zurückliegenden Zyklen einen geringeren Einfluß auf die Prozeßparameter des aktuellen Zyklus haben als diejenigen von zeitlich weniger weit zurückliegenden Zyklen.

Zusätzlich kann periodisch beispielsweise alle 50 Zyklen ein Zyklus mit einer verringerten Planetärgeschwindigkeit gefahren werden. Als Folge wird aufgrund der geringeren Spülwirkung in diesem Zyklus der Bearbeitungsspalt größer und damit die Funken länger. Dabei kann dann genauer erkannt werden, was noch erodiert werden muß. Diese noch zu erodierenden Abschnitte können durch entsprechend angepaßte Prozeßparameter für den nachfolgenden Zyklus dahingehend vorbereitet werden, daß im nachfolgenden Zyklus beispielsweise nur noch diese Abschnitte erodiert werden. Dieser Abtastzyklus dient somit einer Erhöhung der Bearbeitungsgenauigkeit und kann vorteilhaft insbesondere kurz vor Bearbeitungsende verstärkt angewandt werden.

Das nachfolgend im Zusammenhang mit den Figuren 4a und 4b beschriebene Verfahren wird zur automatischen Ermittlung der abtragsoptimalen Planetärgeschwindigkeit durch die CNC-Steuerung 15 eingesetzt. Zunächst wird ein Abtastzyklus mit reduzierter Planetärgeschwindigkeit $V_{P1}$ durchgeführt, wodurch sich eine erhöhte Spaltbreite einstellt. Lokale Unstetigkeiten aber auch feine Geometriemerkmale werden dadurch besser erfaßt. Danach werden vorzugsweise zumindest zwei weitere Zyklen (Umläufe) mit konstanter, jedoch unterschiedlicher Planetärgeschwindigkeit $V_{P2}$ und $V_{P3}$ durchgeführt, wobei diese Planetärgeschwindigkeiten $V_{P2}$ und $V_{P3}$ im Bereich der idealen Planetärgeschwindigkeit liegen sollten. Somit stehen der CNC-Steuerung 15 danach die Prozeßparameter zumindest dreier Zyklen mit konstanter, jeweils unterschiedlicher Planetärgeschwindigkeit $V_{P1}$, $V_{P2}$ und $V_{P3}$ zur Verfügung. Daraufhin ermittelt die CNC-Steuerung 15 auf der Grundlage der ermittelten Prozeßparameter anhand eines rechnerischen Verfahrens, z.B. einer Regressionsrechnung oder eines praktischen Näherungsverfahrens, diejenige Planetärgeschwindigkeit $V_{P\,opt}$, die zu den besten Abtragswerten führt.

Die Ableitung der abtragsoptimierten Planetärgeschwindigkeit aus den Prozeßparametern kann dabei folgendermaßen stattfinden. Einerseits kann diese auf der Grundlage des abgetragenen Volumens abgeleitet werden, welches aus den von der Servoeinheit 11 auszuführenden Zustellbewegungen der Antriebe 4 bis 6 ermittelt wird. Hierzu werden mehrere Umläufe durchgeführt, um unterschiedliche Stützwerte aufzustellen. Die Planetärgeschwindigkeit wird dabei in jedem neuen Umlauf so geändert, bis keine merkliche Verbesserung der Abtragsleistung mehr gemessen wird.

Alternative zu dieser Ableitung kann die Optimierung der Planetärgeschwindigkeit hinsichtlich des Abtrags auf der Berechnung des Wirkungsgrades basieren. Dabei wird zuerst der Istwert der mittleren Erosionsleistung aus den Istwerten für den Entladestrom und die Erosionsspannung berechnet. Die Ist-Leistung ist das Produkt aus der Impulsspannung, dem Istwert für den Entladestrom und dem Duty-cycle (Verhältnis T/(T+P), wobei T die Zeit des angelegten Impulses und P die zwischen zwei aufeinanderfolgenden Impulsen liegende Pausenzeit ist). Die neue Planetärgeschwindigkeit wird dann in einem Näherungsverfahren abhängig von dem Wirkungsgrad und der Planetärgeschwindigkeit zweier zuvor ausgeführter Umläufe ermittelt (siehe auch Fig. 4b):

$$V_{P3} = V_{P2} - \lambda * (\eta_2 - \eta_1) / (V_{P1} - V_{P2})$$

Dieses Ermittlungsverfahren kann periodisch während der gesamten Bearbeitung durchgeführt werden, wobei der Zyklus mit der langsameren Planetärgeschwindigkeit (Abtastzyklus) auch weggelassen werden kann. Damit wird für die aktuelle Bearbeitungssituation immer eine abtragsoptimale Planetärgeschwindigkeit $V_{P\,opt}$ ermittelt. Diese wird dann wiederum zumindest während des laufenden aber auch für weitere Planetärumlaufe, vorzugsweise aber auch für mehrere der nachfolgenden Schichten k, k+1, k+2 zugrunde gelegt.

Diese Abtragsoptimierung findet wie bereits bemerkt periodisch, z.B. alle 50 Schichten, oder bei Bedarf statt, z.B. wenn aus der Entwicklung der Prozeßparameter auf eine merkliche Geometrieänderung geschlossen werden kann. Vor jedem Zyklus zur Ermittlung der abtragsoptimalen Planetärgeschwindigkeit $V_{P\,opt}$ werden die sektorspezifischen Informationen der vorangehenden Umläufe gelöscht oder zumindest abgewertet. Unerwünschte Glättungseffekte werden auf diese Art vermieden.

Die Ermittlung der abtragsoptimalen Planetärgeschwindigkeit $V_{P\,opt}$ kann, wie bemerkt, auch unabhängig von dem beschriebenen Abtastzyklus mit konstanter, relativ niedriger Planetärgeschwindigkeit $V_{P1}$ (Fig. 4a) erfolgen. Diese Trennung hat den Vorteil, daß Abtastzyklen und Abtragsoptimierungszyklen nur so oft wie nötig durchgeführt werden.

Nach der Ermittlung der optimalen Planetärgeschwindigkeit $V_{P\,opt}$ beginnt die zyklische Bearbeitung bevorzugt, indem die dem Ermittlungsverfahren folgenden Planetärumläufe vorerst mit dieser optimalen Planetärgeschwindigkeit $V_{P\,opt}$ ausgeführt werden, wobei die relevanten Prozeßparameter Sektor für Sektor, wie oben beschrieben, gespeichert werden. Während des störungsfreien Betriebes wird die so bestimmte abtragsoptimale Planetärgeschwindigkeit $V_{P\,opt}$ eingesetzt. Macht sich eine Störung bemerkbar, dann werden sofort Maßnahmen zur Unterbindung der Störung und zur Vermeidung einer Prozeßentartung eingeleitet. Bereits bei dem nachfolgenden Umlauf ist die CNC-Steuerung 15 gewarnt, an die entsprechende Stelle mit angepaßten Prozeßparametern heranzufahren (also ggf. auch mit einer geänderten Planetärgeschwindigkeit). Nach einer bestimmten Anzahl Zyklen wird dann wieder eine neue abtragsoptimale Planetärgeschwindigkeit $V_{P\,opt}$ bestimmt und ggf. mittels eines Abtastzyklus auch noch einmal die Bearbeitungsgenauigkeit überprüft.

Zusammenfassend wird somit im Verlaufe der schichtweisen Aufweitung mit dem vorstehend beschriebenen Ermittlungsverfahren die jeweils abtragsoptimale Planetärgeschwindigkeit periodisch oder auch nur bei beachtenswerter Änderung der Bearbeitungsbedingungen ermittelt. Mit dieser, für den störungsfreien Normalbetrieb geeigneten Planetärgeschwindigkeit wird das Material Schicht für Schicht abgetragen, während in der Nähe kritischer Bereiche Geschwindigkeit, Impulsparameter und Servosteuerungsparameter angepaßt werden. Leerlaufbereiche werden dabei mit erhöhter Planetärgeschwindigkeit überstrichen. Insgesamt erfolgt damit die Bearbeitung immer mit einer der jeweils sinnvollsten Planetärgeschwindigkeit, die der lokalen Arbeitsbedingung und dem Arbeitsfortschritt Rechnung trägt, wodurch optimale Bearbeitungszeiten bei verbesserter Formgenauigkeit erreicht werden.

Um die Formtreue zu gewährleisten wird am Ende der Bearbeitung jeder Schicht verifiziert, ob jeder Sektor der aktuellen Schicht mit der erforderlichen Genauigkeit bearbeitet wurde. Ist dies der Fall, so ist das Ende dieses Arbeitsschritts erreicht. Mit anderen Worten kann, wenn an keiner Stelle während eines vollständigen Planetärumlaufes mehr erodiert wird, die nächste Schicht in Angriff genommen werden.

Dabei kann bei einem Umlauf auf der aktuellen Schicht, wenn kein weiterer Abtrag mehr stattfindet, also ein Leerlauf erkannt wird, der verbleibende Bereich bis zum Ende dieser Schicht mit erhöhter Geschwindigkeit durchfahren werden.

Bei der Bearbeitung mit Elektroden nicht-runden Querschnitts kann die CNC-Steuerung 15 die Planetärgeschwindigkeit zum Vermeiden von Zeitverlusten folgendermaßen einstellen: Kurz vor dem Bearbeitungsende einer Schicht wird gewöhnlich nur noch an denjenigen Stellen erodiert, wo mehr Material abzutragen ist, also typischerweise längs der Seiten der nicht-runden Bearbeitungselektrode. Wird die Planetärgeschwindigkeit an den anderen Stellen entsprechend heraufgefahren, so werden insgesamt praktisch keine Zeitverluste verursacht. Insbesondere an diesem Beispiel hier wird nun die Bedeutung der Abtastzyklen ersichtlich. Das diese Abtastzyklen bei niedriger Planetärgeschwindigkeit ablaufen, können dank des größeren Arbeitsspaltes noch zu erodierende Stellen erkannt werden, die bei normaler Planetärgeschwindigkeit unerkannt geblieben wären.

Es soll nun kurz auf die Anwendung der Erfindung in Zusammenhang mit dem sogenannten Nachschneiden bei der Drahterosion eingegangen werden. Bekanntlich erfolgt die Drahterosion durch die relative Bewegung einer ablaufenden Elektrode gegenüber einem Werkstück, wobei eine geringe Distanz - der Funkenspalt - zwischen diesen Teilen bleibt und über den Funkenspalt eine elektrische Entladung erfolgt. Zuerst wird ein Vollschnitt ausgeführt, wodurch die Geometrie der Bearbeitung schon grundlegend geprägt wird. Danach erfolgen mehrere (beispielsweise 5 oder 6 Nachschnitte), die zu dem gewünschten Bearbeitungsergebnis, d.h. der gewünschten Formgenauigkeit und Rauhigkeit führen. Dieser Vollschnitt zusammen mit den Nachschnitten stellt die zyklische Bearbeitung bei der Drahterosion dar.

Von Nachschnitt zu Nachschnitt erfolgt eine progressive Reduktion der Parameter. Störungen, die sich während des Vollschnittes oder eines Nachschnittes ergeben, werden gemäß der Erfindung zumindest im darauf folgenden Nachschnitt berücksichtigt. Hierdurch ergibt sich beim Drahterodieren besonders der Vorteil, daß beim Schlichten brisante Stellen mit besonderer Vorsicht angefahren werden und Beschädigungen der Oberfläche vermieden werden können.

Die Erfindung ist obenstehend insbesondere für die Senkerosion und die Drahterosion (WEDM) beschrieben worden. Es ist jedoch ebenfalls möglich, die Erfindung auf das sog. EDM-Milling zu übertragen. Unter Berücksichtigung der verfahrensspezifischen Eigenheiten ist die Erfindung weiterhin auf die elektrochemische Bearbeitung (ECM) mit zyklischem Arbeitsfortgang übertragbar.

**Patentansprüche**

**1.** Verfahren zur funkenerosiven oder elektrochemischen Bearbeitung von Werkstücken, bei dem eine Bearbeitungselektrode (3) relativ zu einem Werkstück (1) bewegt wird, die Bearbeitung Zyklen umfaßt, geeignete Prozeßparameter für die Bearbeitung des aktuellen Zyklus eingestellt werden, und für die Einstellung der Prozeßparameter des aktuellen Zyklus gespeicherte Prozeßparameter zumindest eines vorangehenden Zyklus herangezogen werden, **dadurch gekennzeichnet, daß** die vorangehenden Zyklen durch einen Soll/Istwert-Vergleich der gemessenen Prozeßparameter auf Abschnitte untersucht werden, in denen eine Bearbeitungsstörung und/oder ein Leerlaufbetrieb auftritt, und zumindest in den entsprechenden Abschnitten des aktuellen Zyklus angepaßte Prozeßparameter zur Unterbindung der Bearbeitungsstörung oder zur Verkürzung des Leerlaufbetriebes eingestellt werden.

**2.** Verfahren nach Anspruch 1, **dadurch gekennzeichnet, daß**

- während zumindest eines vorangehenden Zyklus wenigstens ein Prozeßparameter gemessen wird,
- aus diesem wenigstens einen gemessenen Prozeßparameter wenigstens ein für den aktuellen Zyklus einzustellender Prozeßparameter abgeleitet wird,
- der wenigstens eine abgeleitete Prozeßparameter während des vorangehenden Zyklus abgespeichert wird, und
- der wenigstens eine abgespeicherte Prozeßparameter während des aktuellen Zyklus eingestellt wird.

3. Verfahren nach Anspruch 1 oder 2, bei dem für die Einstellung der Prozeßparameter während des aktuellen Zyklus alternativ oder zusätzlich in einer Tabelle (12) fest gespeicherte Prozeßparameter herangezogen werden, welche insbesondere bezüglich einer Optimierung des Abtrags, bezüglich einer Durchführung eines Leerlaufs und/oder bezüglich der Durchführung einer garantierten störungsfreien Bearbeitung festgelegt sind.

4. Verfahren nach einem der vorhergehenden Ansprüche, **dadurch gekennzeichnet, daß** es sich bei der Zyklen umfassenden Bearbeitung um:

   - eine senkerosive Aufweitung,
   - eine Drahterosionsbearbeitung mit zumindest einem Nachschnitt, oder
   - eine Drahterosionsbearbeitung mit Vollabtragsschnitt handelt.

5. Verfahren nach einem der vorhergehenden Ansprüche, **dadurch gekennzeichnet, daß** bereits in einem Bereich vor den entsprechenden Abschnitten des aktuellen Zyklus angepaßte Prozeßparameter eingestellt werden.

6. Verfahren nach Anspruch 5, **dadurch gekennzeichnet, daß** die Länge des Bereichs abhängig von der Planetärgeschwindigkeit gewählt wird.

7. Verfahren nach einem der vorhergehenden Ansprüche, **dadurch gekennzeichnet, daß** die Bearbeitung in eine Vielzahl Schichten und Sektoren unterteilt wird und die relevanten Prozeßparameter schicht- und sektorweise abgespeichert werden.

8. Verfahren nach Anspruch 7, **dadurch gekennzeichnet, daß** für den aktuellen Zyklus die Prozeßparameter zu Beginn eines Sektors eingestellt werden, welche aus den gemessenen Prozeßparametern vorangehender Zyklen abgeleitet sind, und Prozeßparameter des aktuellen Zyklus jeweils am Ende eines Sektors als Meßgrößen für den auf den aktuellen Zyklus folgenden Zyklus erfaßt und gespeichert werden.

9. Verfahren nach Anspruch 8, **dadurch gekennzeichnet, daß** nach der Einstellung der Prozeßparameter zu Beginn eines Sektors bis zur Messung der Prozeßparameter am Ende eines Sektors lediglich ausgewählte Prozeßparameter auf besondere Störungsfälle hin überwacht werden.

10. Verfahren nach einem der vorhergehenden Ansprüche, **dadurch gekennzeichnet, daß** die gespeicherten Prozeßparameter nach jedem Zyklus mit einem Gewichtungskoeffizienten multipliziert werden.

11. Verfahren nach Anspruch 10, **dadurch gekennzeichnet, daß** Zyklen mit störungsbehafteten Abschnitten mit einem erhöhten Gewichtungskoeffizienten multipliziert werden.

12. Verfahren nach einem der vorhergehenden Ansprüche, **dadurch gekennzeichnet, daß** die zu speichernden Prozeßparameter wenigstens einen der nachfolgenden Parameter umfassen:

   - die Summe der Servo-Inteps-Fehler,
   - die Entladeleistung,
   - den mittleren Entladestrom,
   - die mittlere Erosionsspannung,
   - die Zündverzögerungszeit,
   - den Prozentanteil an Kurzschlußimpulsen,
   - den Prozentanteil an Instabilität,
   - die Frequenz der programmierten Rückzugsbewegungen,
   - die Anzahl der Eingriffe des Verfahrens zum Vermeiden entarteter Impulse,
   - die mittlere Pausenspannung.

**13.** Verfahren nach einem der vorhergehenden Ansprüche, **dadurch gekennzeichnet, daß** die einzustellenden Prozeßparameter wenigstens einen der nachfolgenden Parameter umfassen:

- die Planetärgeschwindigkeit,
- Impulsparameter, insbesondere

  - die Periodendauer,
  - die Pausendauer,
  - den Strom,
  - die Spannung,

- Servosteuerungsparameter, insbesondere

  - die Verstärkung,
  - den Servosollwert,

- programmierte Rückzugbewegungen, insbesondere

  - die Frequenz der Rückzugbewegungen,
  - den Hub der Rückzugbewegungen,
  - die Strategie bei Rückzugbewegungen.

**14.** Verfahren nach einem der vorhergehenden Ansprüche, **dadurch gekennzeichnet, daß** die Planetärgeschwindigkeit als einzustellender Prozeßparameter hinsichtlich des Abtrags optimiert wird, indem diese aus mehreren Zyklen mit jeweils unterschiedlicher Planetärgeschwindigkeit ($V_{P1}$, $V_{P2}$, $V_{P3}$) ermittelt wird, wobei jeder Zyklus mit einer konstanten Planetärgeschwindigkeit durchgeführt wird.

**15.** Verfahren nach einem der vorhergehenden Ansprüche, **dadurch gekennzeichnet, daß** die Planetärgeschwindigkeit als einzustellender Prozeßparameter hinsichtlich der Bearbeitungsgenauigkeit optimiert wird, indem ein Zyklus mit einer gegenüber der abtragsoptimierten Planetärgeschwindigkeit verringerten Planetärgeschwindigkeit durchfahren wird und anhand gemessener Prozeßparameter die in der Bearbeitungsgenauigkeit optimierte Planetärgeschwindigkeit ermittelt wird.

**16.** Verfahren nach Anspruch 14 oder 15, **dadurch gekennzeichnet, daß** die abtragsoptimierte ($V_{P\,opt}$) und/oder die in der Bearbeitungsgenauigkeit optimierte Planetärgeschwindigkeit periodisch nach einer bestimmten Anzahl Zyklen oder bei Eintreten relevanter Änderungen der Prozeßparameter neu ermittelt wird.

**17.** Vorrichtung zur funkenerosiven oder elektrochemischen Bearbeitung von Werkstücken, bei dem eine Bearbeitungselektrode (3) relativ zu einem Werkstück (1) bewegt wird, und die eine Prozeßparametererfassungs- und Verarbeitungseinheit (9) umfaßt, die derart ausgestaltet ist, daß sie die Bearbeitung in Zyklen unterteilt, geeignete Prozeßparameter für die Bearbeitung des aktuellen Zyklus einstellt, und für die Einstellung der Prozeßparameter des aktuellen Zyklus gespeicherte Prozeßparameter zumindest eines vorangehenden Zyklus heranzieht, **dadurch gekennzeichnet, daß** die Prozeßparametererfassungs- und Verarbeitungseinheit (9) ferner derart ausgestaltet ist, daß sie vorangehende Zyklen durch einen Soll/Istwert-Vergleich der gemessenen Prozeßparameter auf Abschnitte untersucht, in denen eine Bearbeitungsstörung und/oder ein Leerlaufbetrieb auftritt, und zumindest in den entsprechenden Abschnitten des aktuellen Zyklus angepaßte Prozeßparameter zur Unterbindung der Bearbeitungsstörung oder zur Verkürzung des Leerlaufbetriebes einstellt.

## Claims

**1.** A method for electrical discharge or electrochemical machining of workpieces, in which a machining electrode (3) is moved relative to a workpiece (1), in which machining is performed in cycles, and in which appropriate process parameters for machining of the current cycle are adjusted, and in which stored process parameters of at least one previous cycle are used to adjust the process parameters of the current cycle, **characterised in that** the preceding cycles are investigated by a reference/actual value comparison of the measured process parameters for sections in which a machining disturbance and/or a no-load condition occurs, and adjusted process parameters are set, at least in the corresponding sections of the current cycle in order to prevent machining disturbances or to shorten the no-load condition.

2.  A method according to claim 1, **characterised in that**
    during at least one preceding cycle, at least one process parameter is measured;
    at least one process parameter to be adjusted for the current cycle is derived from the at least one measured process parameter;
    the at least one derived process parameter is stored during the at least on preceding cycle; and
    the at least one stored process parameter is adjusted during the current cycle.

3.  A method according to claim 1 or 2 in which process parameters permanently stored in a table (12) are used as an alternative or additionally for adjustment of the process parameters during the current cycle, which are established, especially with reference to optimization of erosion, with reference to performance of a no-load and/or with reference to performance of a guaranteed disturbance-free machining.

4.  A method according to any one of the preceding claims, **characterised in that** the machining including cycles involves at least one of:

    cavity sinking widening;
    wire erosion machining with at least one aftercut; and
    wire erosion machining with pocketing.

5.  A method according to any one of the preceding claims, **characterised in that** the adjusted process parameters are set already in a region before the corresponding sections of the current cycle.

6.  A method according to claim 5, **characterised in that** the length of the region is chosen as a function of planetary speed.

7.  A method according to any one of the preceding claims, **characterised in that** machining is divided into a number of layers and sectors and the relevant process parameters are stored layer- and sector-wise.

8.  A method according to claim 7, **characterised in that** the process parameters for the current cycle are set at the beginning of a sector, which are derived from the measured process parameters of previous cycles, and the process parameters of the current cycle are recorded and stored at the end of the sector as measured quantities for the cycle following the current cycle.

9.  A method according to claim 8, **characterised in that**, after adjustment of the process parameters at the beginning of a sector, up to measurement of the process parameters at the end of a sector, only selected process parameters are monitored for special disturbances.

10. A method according to any one of the preceding claims, **characterised in that** the stored process parameters are multiplied by a weighting factor after each cycle.

11. A method according to claim 10, **characterised in that** cycles with disturbance-affected sections are multiplied by an increased weighting factor.

12. A method according to any one of the preceding claims, **characterised in that** the process parameters to be stored include at least one of the following parameters:

    the sum of the servo-inteps error;
    the discharge power;
    the average discharge current;
    the average erosion voltage;
    the ignition delay time;
    the percentage of short-circuit pulses;
    the percentage of instability;
    the frequency of programmed return movements;
    the number of interventions in the process to avoid degenerate pulses; and
    the average pause voltage.

**13.** A method according to any one of the preceding claims, **characterised in that** the process parameters to be adjusted include at least one of the following parameters:

the planetary speed;
pulse parameters, including at least one of
period duration,
pause duration,
current, and
voltage;
servo control parameters including at least one of
amplification, and
servo reference value; and
programmed return movements including at least one of
the frequency of return movements,
the stroke of return movements, and
the strategy during return movements.

**14.** A method according to any one of the preceding claims, **characterised in that** the planetary speed is optimized as process parameter to be adjusted with respect to erosion, in which this is determined from several cycles with different planetary speeds ($Vp_1$, $Vp_2$, $Vp_3$) in which each cycle is conducted with a constant planetary speed.

**15.** A method according to any one of the preceding claims, **characterised in that** the planetary speed is optimized as process parameter to be adjusted with respect to machining accuracy, in which a cycle is run with a planetary speed reduced relative to the erosion-optimized planetary speed and the planetary speed optimized in machining accuracy is determined by means of the measured process parameter.

**16.** A method according to claim 14 or 15, **characterised in that** the erosion-optimized ($Vp_{opt}$) and/or the planetary speed optimized in machining accuracy is periodically determined after a specific number of cycles, or on occurrence of relevant changes in process parameters.

**17.** An apparatus for electrical discharge or electrochemical machining of workpieces, in which a machining electrode (3) is moved relative to a workpiece (1), and which comprises a process parameter recording and processing unit (9) which is configured to divide the machining in cycles, to adjust appropriate process parameters for machining of the current cycle, and to use stored process parameters of at least one previous cycle for adjusting the process parameters of the current cycle, **characterised in that** the process parameter recording and processing unit (9) is further configured to investigate the preceding cycles by a reference/actual value comparison of the measured process parameters for sections in which a machining disturbance and/or a no-load condition occurs, and to set adjusted process parameters, at least in the corresponding sections of the current cycle in order to prevent the machining disturbance or to shorten the no-load condition.

**Revendications**

**1.** Procédé d'usinage de pièces par électroérosion ou électrochimie, dans lequel on déplace une électrode d'usinage (3) par rapport à une pièce (1), l'usinage comprenant des cycles, des paramètres de traitement appropriés à l'usinage du cycle en cours sont réglés et, pour régler les paramètres de traitement du cycle en cours, on extrait d'au moins un cycle précédent des paramètres de traitement mémorisés, **caractérisé en ce que** les cycles précédents ont été analysés en comparant des valeurs de consigne/réelles des paramètres de traitement mesurés dans des parties où un défaut d'usinage et/ou un fonctionnement au ralenti s'est produit, et on règle des paramètres de traitement adaptés au moins dans les parties correspondantes du cycle en cours pour empêcher le défaut d'usinage ou pour raccourcir le fonctionnement au ralenti.

**2.** Procédé selon la revendication 1, **caractérisé en ce qu'**

- on mesure au moins un paramètre de traitement pendant au moins un cycle précédent,
- on dérive, à partir de l'au moins un paramètre de traitement mesuré, au moins un paramètre de traitement à régler pour le cycle en cours,
- on enregistre l'au moins un paramètre de traitement dérivé pendant le cycle précédent, et

- on règle l'au moins un paramètre de traitement enregistré pendant le cycle en cours.

3. Procédé selon la revendication 1 ou 2, selon lequel, pour régler les paramètres de traitement pendant le cycle en cours, on extrait en variante ou en plus des paramètres de traitement enregistrés dans un tableau (12) qui sont déterminés notamment par rapport à une optimisation d'un enlèvement de matière, par rapport à la réalisation d'un ralenti et/ou par rapport à la réalisation d'un usinage garanti sans défaut.

4. Procédé selon l'une des revendications précédentes, **caractérisé en ce que**
   l'usinage comprenant des cycles est :

   - un élargissement dû à une érosion par enfonçage,
   - un usinage par érosion filaire avec au moins une recoupe, ou
   - un usinage par érosion filaire avec une coupe complète par enlèvement de matière.

5. Procédé selon l'une des revendications précédentes, **caractérisé en ce qu'**on règle des paramètres de traitement adaptés déjà dans une zone en amont des parties correspondantes du cycle en cours.

6. Procédé selon la revendication 5, **caractérisé en ce que** la longueur de la zone est choisie en fonction de la vitesse du planétaire.

7. Procédé selon l'une des revendications précédentes, **caractérisé en ce que** l'usinage est divisé en une multitude de couches et de secteurs et les paramètres de traitement applicables sont enregistrés par couche et par secteur.

8. Procédé selon la revendication 7, **caractérisé en ce que**, pour le cycle en cours, les paramètres de traitement dérivés des paramètres de traitement mesurés dans des cycles précédents sont réglés au début d'un secteur, et on détecte et on mémorise des, paramètres de traitement du cycle en cours à chaque fois à la fin d'un secteur sous forme de grandeurs de mesure pour le cycle suivant le cycle en cours.

9. Procédé selon la revendication 8, **caractérisé en ce qu'**après avoir réglé les paramètres de traitement au début d'un secteur, et jusqu'à la mesure des paramètres de traitement à la fin d'un secteur, on surveille certains cas de défauts uniquement sur les paramètres de traitement qui ont été sélectionnés.

10. Procédé selon l'une des revendications précédentes, **caractérisé en ce que** les paramètres de traitement mémorisés sont multipliés après chaque cycle par un coefficient de vitesse.

11. Procédé selon la revendication 10, **caractérisé en ce que** des cycles comprenant des parties ayant subi des défauts sont multipliés par un coefficient de vitesse plus élevé.

12. Procédé selon l'une des revendications précédentes, **caractérisé en ce que** les paramètres de traitement à mémoriser comprennent au moins un des paramètres suivants :

   - la somme des erreurs Servo-Inteps,
   - la puissance de décharge,
   - le courant de décharge moyen,
   - la tension d'érosion moyenne,
   - la temporisation à l'allumage,
   - le pourcentage d'impulsions de court-circuit,
   - le pourcentage d'instabilités,
   - la fréquence des déplacements de retour programmés,
   - le nombre d'interventions du procédé pour éviter des impulsions dégénérées,
   - la tension de pauses moyennes.

13. Procédé selon l'une des revendications précédentes, **caractérisé en ce que** les paramètres de traitement à régler comprennent au moins un des paramètres suivants :

   - la vitesse du planétaire,
   - des paramètres d'impulsions, notamment,
   - la durée de la période,

- la durée des pauses,
- le courant,
- la tension,
- des paramètres de servocommande, notamment :

    - l'amplification,
    - la valeur de consigne de servocommande,

- des déplacements de retour programmés, notamment :

    - la fréquence des déplacements de retour,
    - la course des déplacements de retour,
    - la stratégie en cas de déplacements de retour.

**14.** Procédé selon l'une des revendications précédentes, **caractérisé en ce que** la vitesse du planétaire servant de paramètre de traitement à régler par rapport à l'enlèvement de matière est optimisée en déterminant celle-ci à partir de plusieurs cycles ayant à chaque fois une vitesse de planétaire différente ($V_{P1}$, $V_{P2}$, $V_{P3}$), chaque cycle étant réalisé avec une vitesse de planétaire constante.

**15.** Procédé selon l'une des revendications précédentes, **caractérisé en ce que** la vitesse du planétaire servant de paramètre de traitement à régler en terme de précision d'usinage est optimisée en traversant un cycle qui a une vitesse de planétaire inférieure à la vitesse du planétaire optimisée par rapport à l'enlèvement de matière et en déterminant à l'aide des paramètres de traitement mesurés la vitesse du planétaire optimisée en terme de précision d'usinage.

**16.** Procédé selon la revendication 14 ou 15, **caractérisé en ce que** la vitesse du planétaire optimisée par rapport à l'enlèvement de matière ($V_{P\ opt}$) et/ou celle optimisée en terme de précision d'usinage est déterminée à nouveau périodiquement après un certain nombre de cycles ou en introduisant des modifications applicables dans les paramètres de traitement.

**17.** Dispositif d'usinage de pièces par électroérosion ou électrochimie, dans lequel on déplace une électrode d'usinage (3) par rapport à une pièce (1), et lequel comprend une unité servant à la détection des paramètres de traitement et à l'usinage (9) configurée de telle sorte qu'elle divise l'usinage en cycles, règle des paramètres de traitement pour l'usinage du cycle en cours, et pour régler les paramètres de traitement du cycle en cours, extrait des paramètres de traitement mémorisés à partir d'au moins un cycle précédent, **caractérisé en ce que** l'unité servant à la détection des paramètres de traitement et à l'usinage (9) est en outre configurée de telle sorte qu'elle analyse les cycles précédents par une comparaison valeurs de consigne/réelles des paramètres de traitement mesurés dans des parties où un défaut d'usinage et/ou un fonctionnement au ralenti s'est produit, et règle des paramètres de traitement adaptés au moins dans les parties correspondantes du cycle en cours pour empêcher tout défaut d'usinage ou pour raccourcir le fonctionnement au ralenti.

FIG. 1

FIG. 2a

FIG. 2b

FIG. 3a

FIG. 3b

Sektor
i
i+1
i+2
i+3
...

1

1

FIG. 3c

Schicht
k
k+1
k+2
k+3
...

FIG. 3d

Wirkungsgrad

$\eta$

FIG. 4a

$V_{P\ Opt}$

Planetärgeschwindigkeit

$V_P$

$V_{P1}$    $V_{P2}$    $V_{P3}$

Wirkungsgrad

$\eta$

FIG. 4b

$V_{P3}$ $V_{P2}$ $V_{P1}$

Planetärgeschwindigkeit

$V_P$